# EUROPEAN PATENT SPECIFICATION

(11) **EP 1 479 489 B1**
(45) Date of publication and mention of the grant of the patent: **11.07.2007**
(21) Application number: 04425360.7
(22) Date of filing: 19.05.2004
(51) Int. Cl.: B27B 27/02, B27B 27/10

(54) **A machine for machining panels.**
Maschine zum Bearbeiten von Platten
Machine à usiner des panneaux

(30) Priority: 23.05.2003 IT BO20030326
(43) Date of publication of application: 24.11.2004
(73) Proprietor: SCM GROUP S.p.A., 47900 Rimini (IT)
(72) Inventor: Pazzini, Ivano, 61015 Novafeltria (Pesaro Urbino) (IT)
(74) Representative: Lanzoni, Luciano

(56) References cited:
- DE-A- 2 014 378

## Description

The present invention relates to a machine for machining panels according to the preamble of claim 1.

More precisely, the machines in question are for machining panels made of wood or similar materials, and more specifically a machine for sawing panels, although it may also advantageously be used for machining other types of materials such as fibre materials, panes of glass or synthetic materials, etc.

The current machines for cutting wooden panels (the standard machines commonly known as circular saws) substantially consist of a support base with an upper portion forming a horizontal table divided into a fixed portion from which the cutting tool projects and a mobile portion, or carriage, mainly extending in a direction in which the panel to be cut slides.

The table - fixed portion has a slit, aligned with the direction of sliding, from which the portion of circular saw with a (nominally) horizontal axis projects.

On the worktable or close to it there may be or it is possible to add various accessories for positioning, defining panel final dimensions, and for aiding panel handling.

The accessories are normally mounted on the machine according to the type of machining and the dimensions of the panels to be machined: for example, for very large panels an auxiliary frame is used, which may be connected to or integral with the mobile portion of the worktable for supporting the panel. This frame extends in a cantilever fashion transversally from one side of the table and is coplanar with the table.

This frame may slide parallel with the worktable, allowing it to be positioned relative to the tool, and is equipped with a first fence with a graduated scale, mounted along one side of the frame, at a right angle to the length of the worktable, indicating the distances of each reference on the scale from the circular saw. A stop rod also slides on the first fence. The stop rod is transversal to the first fence, to make one end of the side coincide with the fence reference indicating the desired length of the side.

In these machines, one of the preliminary operations usually carried out, known as "trimming" to experts in the field, is a removal of the excess portion of the panel relative to the final size decided on, leaving a small amount of material on the sides of the panel which can be machined to eliminate any splintered side surfaces, or those showing any surface imperfections.

For example, this trimming, on large panels on which straight and parallel cuts must be made, is usually performed by resting the panel on the mobile portion of the worktable (which moves alongside the tool), in particular when trimming the longest side; bringing one end of the longest side which is furthest away from the tool into contact with the rod on the first fence (already positioned at the panel theoretical dimension decided by the operator) and the other end into contact with a second, accessory fence attached to and sliding on the mobile portion of the worktable, also positioned according to the predetermined measurement, like the other stop.

This second fence, with a graduated scale and sometimes a second stop rod, is then used, during the operating, cutting step, as a counter-stop (or second stop) on the panel, together with the first fence.

On the second fence there is a contact element for definition of the quantity of trimming material to be removed from the panel.

This contact element basically consists of a box-shaped body which pivots at the end of the second fence and makes contact with the side of the panel. Lifting of this contact element relative to the worktable with the related backward movement of the panel towards a real stop on the second fence determines the quantity of material to be removed from the panel. Simultaneously with lifting of the contact element, the stop rod on the first fence on the frame is lifted at the other end (allowing the panel to move back by the measurement defined by lifting of the contact element).

At this point the panel is trimmed, without checking the parallelism of the sides, which is subsequently checked by turning the panel.

This solution defining the trimming dimension for removal from the panel is, therefore, fixed (i.e.: defined during design - production of the contact element by the manufacturers) and is determined by the distance between the end of the contact element and the stop covered by the element.

However, now, the increasing attention to the various accessory operations on these machines and sensitisation to the quantity of material removed and unused has led to the need for more checks on the trimming dimension removed.

In addition to this, there is an increasing demand for connection of the trimming step and the checking of parallelism on the panel to be machined, since until now, during trimming, contact was substantially lost with the stop on the side of the panel against the first fence of the frame.

The aim of the present invention is, therefore, to overcome these disadvantages by providing a machine for machining panels which has a structure that allows the adjustment, that is to say, variation, of the dimension relating to the amount of material to be removed during panel trimming according to operating requirements, without making excessive alterations to the structures on the machine.

The present invention fulfils this aim with a machine for machining panels according to claim 1. Further preferred according to claim 1. Further preferred embodiments of the invention are disclosed by the dependent claims.

A detailed description follows, with reference to the accompanying drawings, which illustrate a preferred embodiment of the invention without limiting the scope of the inventive concept, and in which:
- Figure 1 is a schematic top plan view with some parts cut away to better illustrate others, of a machine for machining panels in accordance with the present invention;
- Figure 2 is a perspective view enlarged relative to Figure 1 of a detail B with reference to Figure 1, that is to say, a first adjustable stop;
- Figure 3 is a top plan view of the detail illustrated in Figure 2;
- Figure 4 is a schematic front view with some parts cut away to better illustrate others of the detail with reference to Figures 2 and 3;
- Figure 5 is a side view of a second detail C with reference to Figure 1, that is to say, a second adjustable stop;
- Figure 6 is a perspective view with some parts cut away to better illustrate others of the second detail with reference to Figure 5 applied to a first reference fence;
- Figure 7 is a front view of the second detail illustrated in Figures 5 and 6.

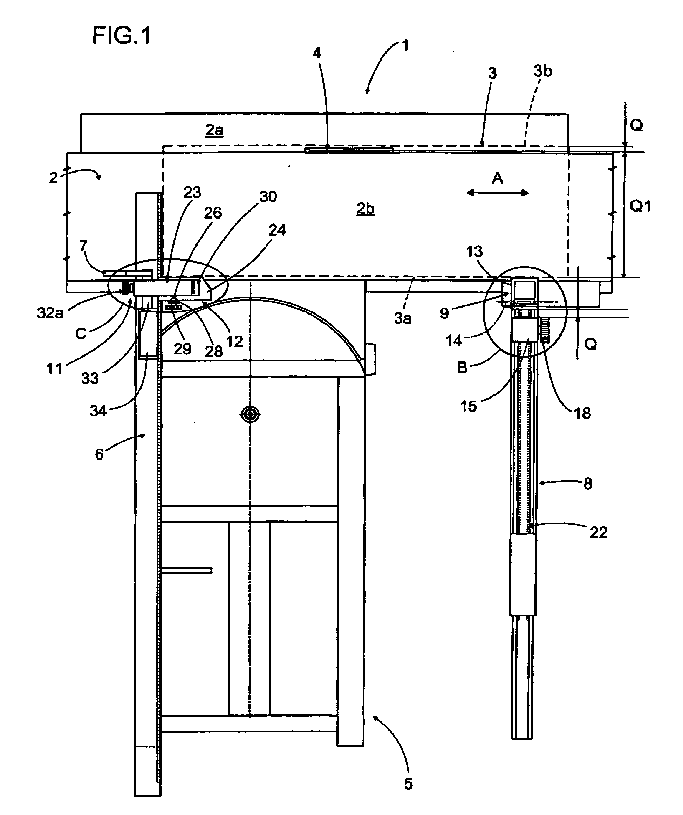

With reference to the accompanying drawings, and in particular with reference to Figure 1, the machine disclosed is used for machining panels made of wood or similar materials, in particular for cutting panels.

This machine, labelled 1 as a whole, basically comprises:
- a worktable 2 consisting of a fixed supporting portion 2a and a portion 2b or carriage mobile, in both directions, along a direction of feed A (see relative arrow) and designed to allow the panel 3 to be cut to slide (panel illustrated with a dashed line);
- a machining tool 4 (for example, a circular saw) positioned on the fixed portion 2a of the worktable 2 and projecting from it;
- a supporting frame 5 for the panel 3 to be machined, attached to and coplanar with the mobile portion 2b, projecting from the dimensions of the worktable 2 and sliding parallel with the direction of feed A, in both directions.

The frame 5 has a first stop fence 6 for the panel 3 positioned at a right angle to the direction of feed A and equipped with an adjustable panel 3 stop rod 7, perpendicular to the first fence 6, and able to slide along the first fence 6 to define the predetermined panel 3 measurements.

Another element present on the machine 1 is a second stop fence 8 for the panel 3, slidably attached to the mobile portion 2b, equipped with first stop and reference mans 9 for a first side 3a of the panel 3.

These first stop and reference means 9 are positioned on the end of the second fence 8 and allow the first side 3a, positioned on the mobile portion 2b, to move backwards by a predetermined dimension, relative to the tool 4, defining an excess material or trimming dimension Q which can be removed from the second, opposite side 3b of the panel 3.

Basically, the stops formed by the stop rod 7 and the end of the second fence 8 are positioned in such a way as to provide a first panel 3 stop at a dimension Q1 defining a theoretical final measurement of the panel 3 size (in which the zero point is always calculated from the tool 4 cutting plane), whilst the first stop means 9 define an excess material or trimming dimension Q to be used to make the sides of the panel 3 of uniform quality and parallel with one another.

These first stop and reference means 9 have first parts 10 for adjusting the trimming dimension Q which can be removed from the panel 3.

Similarly, on the first fence 6 there are second stop and reference means 11 for the first side 3a of the panel 3, with second parts 12 for adjusting the trimming dimension Q which can be co-ordinated wi th the first stop and reference means 9 positioned on the second fence 8. This allows the definition, with this first machining, of parallelism on the second side 3b which can be machined relative to the first side 3a.

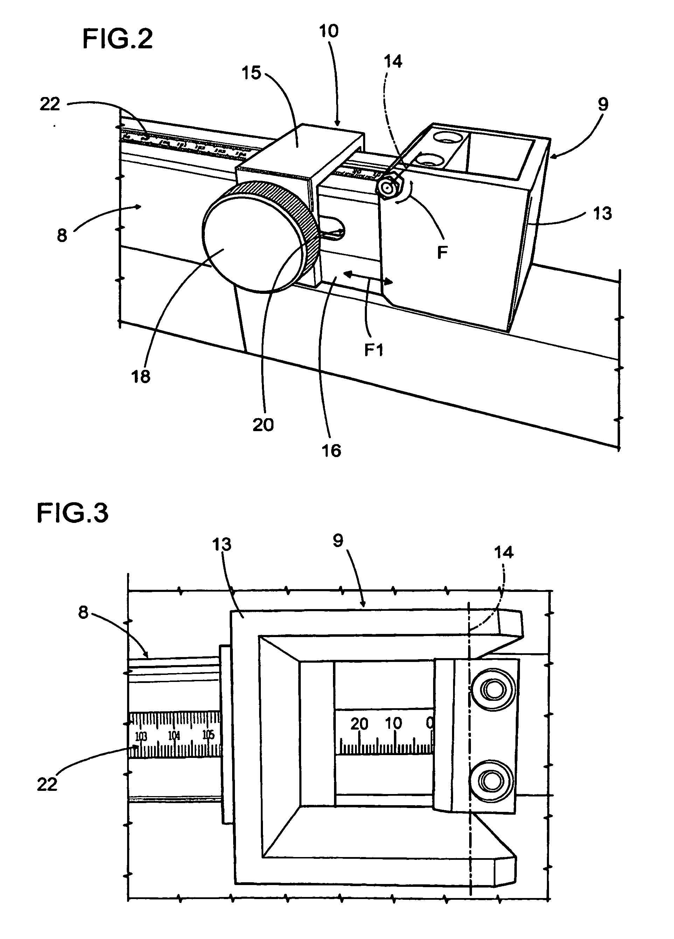

As illustrated in Figures 2 and 3, the first stop and reference means 9 comprise:
- a box-shaped body 13 pivoting, at 14, on the end of the second fence 8 and able to turn between a lowered operating stop position at the predetermined dimension Q1 on the first side 3a, in which the body 13 covers an operating stop surface present on the second fence 8, and a raised, non-operating position, in which the body 13 is turned upwards and allows free access to the first side 3a towards the operating stop on the second fence 8 (see also arrow F in Figure 2).

The first adjusting parts 10 in turn comprise:
- a bridge-shaped reference element 15 slidably encompassing the second fence 8;
- an operating stop bar 16 which slides parallel with and relative to the second fence 8, positioned below said fence, and attached, on both sides, to the lower ends of the bridge-shaped element 15.

This bridge-shaped element 15 is mobile along the second fence 8 (see arrows F1 in Figure 2) in such a way as to allow relative sliding of the bar 16 in both directions from a first, back end position, in which the free end of the bar 16 coincides with the end of the second fence 8, corresponding to the maximum trimming dimension Q, and a second, forward end position, in which the stop bar 16 projects from the end of the second fence 8, corresponding to the minimum trimming dimension Q which can be removed.

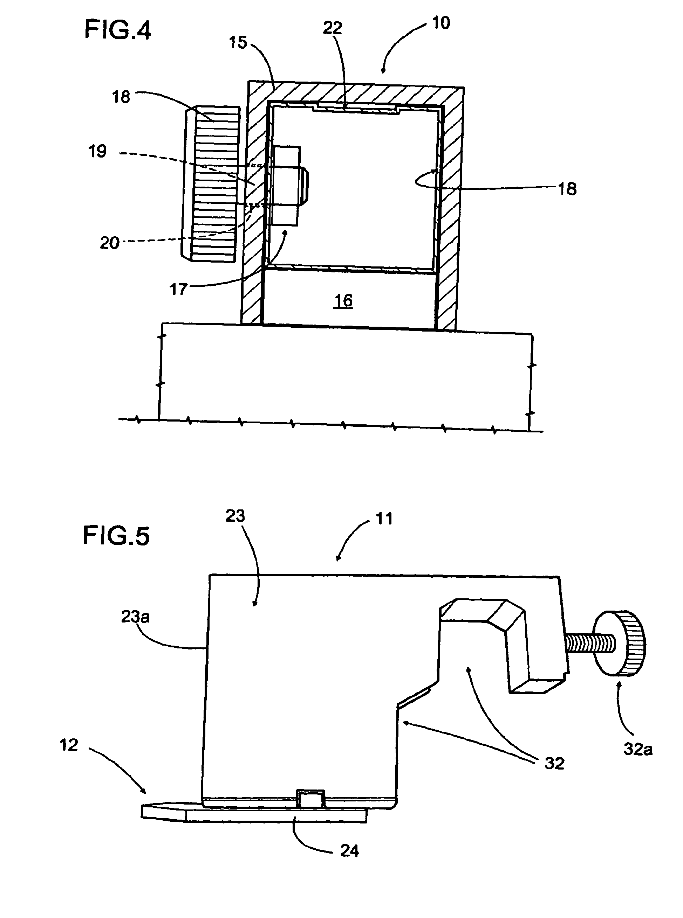

As is also illustrated in Figure 4, the bridge-shaped element 15 has reversible means 17 for locking the bridge-shaped element 15 in the predetermined position.

These means 17 may comprise a control knob 18 attached to a first threaded pin 19 passing into the bridge-shaped element 15 and attached to a surface of the second fence 8, which has a sliding slot 20 for the first pin 19 for the bridge-shaped element 15 adjusting movement.

The first pin 19 is connected to an internal retaining plate designed to allow the bridge-shaped element 15 to be locked to the second fence 8 by contact with a relative internal surface of the second fence 8 after tightening.

As is clearly visible in Figure 3, the second fence 8 has a graduated scale 22 at its stop end, which can be used to display the trimming dimension Q removable defined by movement of the bridge-shaped element 15. The references for the display are defined between the bridge-shaped element 15 and the pivot point 14 of the box-shaped body 13.

Figures 5, 6 and 7 illustrate in detail the second stop and reference means 11, which comprise a bridge-shaped supporting body 23 applicable with its matching profile on the first fence 6 and in a position coinciding with the stop end of the second fence 8.

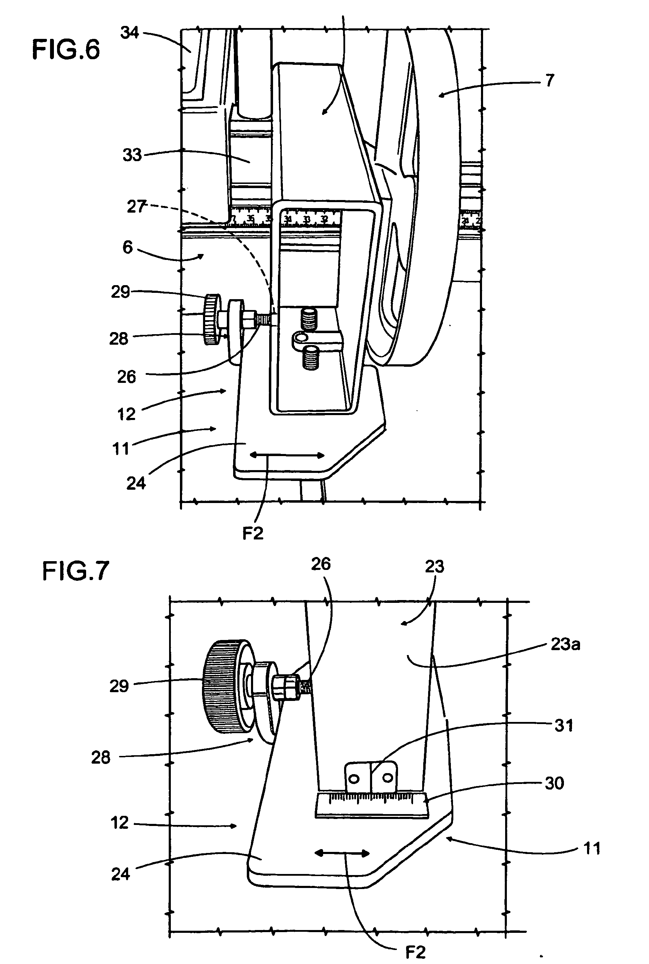

The body 23 is connected to a lower horizontal plate 24, forming the second adjusting parts 12, with a stop zone for the first side 3a of the panel 3 and mobile, in both directions, parallel with the mobile portion 2b of the table 2 and relative to the supporting body 23 according to the trimming dimension Q set on the first stop means 9 (see arrows F2 in Figures 6 and 7).

The supporting body 23 is positioned on the first fence 6 close to the stop rod 7 which also slides on the first fence 6. In this way a stop reference is defined in which the horizontal plate 24 coincides with the first stop means 9.

The horizontal plate 24 may have a threaded pin 26 which can be screwed into a seat 27 in the supporting body 23 and attached to a vertical arm 28 integral with the plate 24.

A manoeuvring knob 29 is connected on the pin 26, designed to allow the plate 24 adjusting movement relative to the body 23. The plate 24 also has a graduated rule 30 positioned close to a reference mark 31 made on a front surface 23a of the supporting body 23 to allow the operator to check that the trimming dimension Q is the same as that selected on the first stop means 9.

Figure 5 clearly shows how the supporting body 23 has a seat 32 which matches and can be attached to the profile of the first fence 6 and reversible means 32a for locking the body 23 to the first fence 6.

The supporting body 23 preferably has this seat 32 matching and able to be attached to a mobile support 33 which slides on the first fence 6 and supporting the stop rod 7 and a dimension display 34 on the first fence 6 (as illustrated in Figures 1 and 6). In this way the body 23 can be attached between the rod 7 and the display 34. Similarly, the means 32a for locking the body 23 operate directly on the mobile support 33.

The machine structured in this way is used in the following way to perform panel trimming.

The operator fixes the frame 5 and the second fence 8 in the required positions on the mobile table 2b then places the panel 3 to be machined on the mobile table 2b.

At this point the theoretical panel 3 dimension Q1 is defined according to the actual size of the panel 3 to be machined, a size which is set on the stop rod 7 and on the second fence 8 then the first side 3a of the panel 3 is brought into contact with them.

When this operation is complete, both the stop rod 7 on the first fence 6 and the box-shaped body 13 on the second fence 8 are raised and the trimming dimension Q for the opposite side 3b is selected.

This is done by sliding the bar 16 on the second fence 8 and the plate 24 on the first fence 6 to the dimension Q selected, then locking them in place to allow contact with the side 3a of the panel 3.

At this point the straight cut is made on the side 3b of the panel 3 which is already relatively parallel with the opposite side 3a.

Then the panel 3 is turned for the definitive cutting to size on the side 3a using the normal support techniques for the stops present, that is to say, the rod 7 and the box-shaped body 13. Obviously, during this cutting operation the second stop means 11 are disabled on the first fence 6.

Therefore, a machine structured in this way fulfils the preset aims thanks to the application of adjusting units in defining the trimming dimension. This definition applies to two precise points of the panel, so that initial parallelism is achieved between the sides of the panel to be trimmed.

The architecture of the systems for adjusting the trimming dimension are extremely simple, precise and rapidly set up and do not require stable additional structures on the stop fences.

Moreover, the possibility of adjusting the trimming dimension allows material to be saved on the panel, making the operation more advantageous than that performed until now.

The invention described has evident industrial applications and may be subject to modifications and variations without thereby departing from the scope of the invention as disclosed by the claims.

## Claims

1. A machine for machining panels, the machine (1) comprising at least:
- a worktable (2) consisting of a fixed supporting portion (2a) and a portion (2b) mobile, in both directions, along a direction of feed (A) and designed to allow the panel (3) to be cut to slide;
- a machining tool (4) positioned on the fixed portion (2a) of the worktable (2);
- a supporting frame (5) for the panel (3) to be machined, attached to and coplanar with the mobile portion (2b), projecting from the dimensions of the table (2) and sliding parallel with the direction of feed (A), in both directions; the frame (5) having a first stop fence (6) for the panel (3) positioned at a right angle to the direction of feed (A) and having an adjustable stop rod (7) for the panel (3) perpendicular to the first fence (6) and able to slide along the first fence (6);
- a second stop fence (8) for the panel (3), slidably attached to the mobile portion (2b), equipped with first stop and reference means (9) for a first side (3a) of the panel (3), said means being positioned on the end of the second fence (8) and designed to allow the first side (3a), positioned on the mobile portion (2b), to move back by a predetermined dimension, relative to the tool (4), forming an excess material or trimming dimension (Q) removable on the second, opposite side (3b) of the panel (3), the machine being **characterised in that** the first stop and reference means (9) have first parts (10) for adjusting the trimming dimension (Q) removable from the panel (3).

2. The machine according to claim 1, **characterised in that** on the first fence (6) there are second stop and reference means (11) for the first side (3a), having second parts (12) for adjusting the trimming dimension (Q), which can be co-ordinated with the first stop and reference means (9) positioned on the second fence (8) in such a way as to allow parallel machining on the second side (3b) machinable.

3. The machine according to claim 1, **characterised in that** the first stop and reference means (9) comprise:
- a box-shaped body (13) pivoting on the end of the second fence (8) and able to turn between a lowered operating preliminary stop position against the first side (3a), in which the body (13) covers an operating stop surface on the second fence (8), and a raised non-operating position, in which the body (13) is turned upwards and allows free access to the first side (3a) towards the operating stop.

4. The machine according to claim 3**, characterised in that** the first adjusting parts (10) comprise:
- a bridge-shaped reference element (15) slidably encompassing the second fence (8);
- an operating stop bar (16) which slides parallel with and relative to the second fence (8), being positioned below the second fence and attached, on both sides, to the lower ends of the bridge-shaped element (15); the bridge-shaped element (15) being mobile along the second fence (8) in such a way as to allow relative sliding of the bar (16) in both directions from a first, back end position, in which the free end of the bar (16) coincides with the end of the second fence (8), corresponding to the maximum trimming dimension (Q), and a second, forward end position, in which the stop bar (16) is projecting from the end of the second fence (8), corresponding to the minimum trimming dimension (Q).

5. The machine according to claim 4, **characterised in that** the bridge-shaped element (15) has reversible means (17) for locking the bridge-shaped element (15) in the predetermined position; said means (17) comprising a control knob (18) attached to a first threaded pin (19) passing into the bridge-shaped element (15) and a surface of the second fence (8) having a sliding slot (20) for the first pin (19) for the bridge-shaped element (15) adjusting movement; the first pin (19) being connected to an internal retaining plate designed to allow the bridge-shaped element (15) to be locked in position by contact with a relative internal surface of the second fence (8) after tightening.

6. The machine according to claim 4, **characterised in that** the second fence (8) has a graduated scale (22) at its stop end, designed to allow the display of the trimming dimension (Q) defined by the movement of the bridge-shaped element (15), and which can be viewed between the bridge-shaped element (15) and a pivot point (14) of a box-shaped body (13).

7. The machine according to claim 2, **characterised in that** the second stop and reference means (11) comprise a bridge-shaped supporting body (23) applicable with its matching profile on the first fence (6) and in a position coinciding with the stop end of the second fence (8); there being connected to the body (23) a lower horizontal plate (24), forming the second adjusting parts (12), having a stop zone for the first side (3a) of the panel (3) and moving in both directions and parallel with a mobile portion (2b) and relative to the supporting body (23) according to the trimming dimension (Q) set on the first stop means (9).

8. The machine according to claim 7, **characterised in that** the supporting body (23) is positioned on the first fence (6) close to a stop rod (7) which slides on the first fence (6) in such a way as to define a stop reference in which the horizontal plate (24) coincides with the first stop means (9).

9. The machine according to claim 7, **characterised in that** the horizontal plate (24) has a threaded pin (26) which screws into a seat (27) made in the supporting body (23) and attached to a vertical arm (28) integral with the plate (24); the pin (26) being attached to a manoeuvring knob (29) designed to allow the plate (24) adjusting movement relative to the body (23).

10. The machine according to claim 9, **characterised in that** the plate (24) has a graduated rule (30) close to a reference mark (31) made on a front surface (23a) of the supporting body (23), allowing a check of the trimming dimension (Q).

11. The machine according to claim 7, **characterised in that** the supporting body (23) has a seat (32) which matches and can be connected to the profile of the first fence (6) and reversible means (32a) for locking the body (23) to the first fence (6).

12. The machine according to claim 7, **characterised in that** the supporting body (23) has a seat (32) which matches and can be connected to a mobile support (33) sliding on the first fence (6) and supporting a stop rod (7) and a dimension display (34) on the first fence (6); it being possible to attach the body (23) between the rod (7) and the display (34).

13. The machine according to claim 12, **characterised in that** the supporting body (23) has reversible means (32a) for locking the body (23) to the mobile support (33).

## Patentansprüche

1. Maschine zum Bearbeiten von Platten, wobei die Maschine (1) wenigstens wie folgt enthält:
- einen Arbeitstisch (2), bestehend aus einem feststehenden Trägerabschnitt (2a) und einem Abschnitt (2b), beweglich in beiden Richtungen entlang einer Zuführrichtung (A) und dazu bestimmt, das Gleiten der zu schneidenden Platte (3) zu erlauben;
- ein Bearbeitungswerkzeug (4), positioniert an dem feststehenden Abschnitt (2a) des Arbeitstisches (2);
- einen Trägerrahmen (5) für die zu bearbeitende Platte (3), angebracht an dem beweglichen Abschnitt (2b) und koplanar zu diesem, über die Abmessungen des Tisches (2) hervorstehend und parallel zu der Zuführrichtung (A) in beiden Richtungen gleitend; wobei der Rahmen (5) eine erste Anlegeleiste (6) für die Platte (3) hat, die im rechten Winkel zu der Zuführrichtung (A) positioniert ist und eine regulierbare Anschlagstange (7) für die Platte (3), lotrecht zu der ersten Anlegeleiste (6) und in der Lage, entlang der ersten Anlegeleiste (6) zu gleiten;
- eine zweite Anlegeleiste (8) für die Platte (3), gleitbar angebracht an dem beweglichen Abschnitt (2b), versehen mit ersten Anschlag- und Bezugsmitteln (9) für eine erste Seite (3a) der Platte (3), wobei die genannten Mittel an dem Ende der zweiten Leiste (8) positioniert und dazu bestimmt sind, es der ersten, an dem beweglichen Abschnitt (2b) positionierten Seite (3a) zu erlauben, sich um eine vorgegebene Abmessung im Verhältnis zu dem Werkzeug (4) zurück zu bewegen, um einen Materialüberschuss oder ein Besäumaufmass (Q) zu bilden, abzutragen auf der zweiten, entgegengesetzten Seite (3b) der Platte (3), wobei die Maschine **dadurch gekennzeichnet ist, dass** die ersten Anschlag- und Bezugsmittel (9) erste Elemente (10) zum Regulieren des Besäumaufmasses (Q) haben, das von der Platte (3) abzutragen ist.

2. Maschine nach Patentanspruch 1, **dadurch gekennzeichnet, dass** an der ersten Anlegeleiste (6) zweite Anschlag- und Bezugsmittel (11) für die erste Seite (3a) vorhanden sind, welche zweite Elemente (12) zum Regulieren des Besäumaufmasses (Q) haben, und welche mit den ersten, an der zweiten Anlegeleiste (8) positionierten Anschlag- und Bezugsmitteln (9) koordiniert werden können, und zwar auf solche Weise, dass eine parallele Bearbeitung der zweiten zu bearbeitenden Seite (3b) erlaubt ist.

3. Maschine nach Patentanspruch 1, **dadurch gekennzeichnet, dass** die ersten Anschlag- und Bezugsmittel (9) wie folgt enthalten:
- einen kastenförmigen Körper (13), angelenkt an das Ende der zweiten Anlegeleiste (8) und in der Lage, sich zwischen einer gesenkten Betriebsposition im Voranschlag an der ersten Seite (3a) zu drehen, in welcher der Körper (13) eine aktive Anschlagfläche an der zweiten Leiste (8) abdeckt, und einer angehobenen Ruheposition, in welcher der Körper (13) nach oben gedreht ist und den freien Zugang zu der ersten Seite (3a) in Richtung des aktiven Anschlags erlaubt.

4. Maschine nach Patentanspruch 3, **dadurch gekennzeichnet, dass** die ersten Regulierelemente (10) wie folgt enthalten:
- ein brückenförmiges Bezugselement (15), gleitbar die zweite Anlegeleiste (8) umfassend;
- eine aktive Anschlagstange (16), welche parallel und im Verhältnis zu der zweiten Anlegeleiste (8) gleitet, wobei sie unter der zweiten Anlegeleiste positioniert und mit beiden Seiten an die unteren Enden des brückenförmigen Elementes (15) angeschlossen ist; wobei das brückenförmige Element (15) auf solche Weise entlang der zweiten Anlegeleiste (8) beweglich ist, dass ein entsprechendes Gleiten der Stange (16) in beiden Richtungen aus einer ersten, zurückgezogenen Endposition, in welcher das freie Ende der Stange (16) mit dem Ende der zweiten Leiste (8) übereinstimmt, entsprechend dem maximalen Besäumaufmass (Q), in eine zweite, vorgeschobene Endposition erlaubt ist, in welcher die Anschlagstange (16) von dem Ende der zweiten Leiste (8) hervorsteht, entsprechend dem minimalen Besäumaufmass (Q).

5. Maschine nach Patentanspruch 4, **dadurch gekennzeichnet, dass** das brückenförmige Element (15) lösbare Mittel (17) zum Befestigen des brückenförmigen Elementes (15) in der vorgegebenen Position hat; wobei die genannten Mittel (17) einen Betätigungsknopf (18) enthalten, angebracht an einem ersten Gewindezapfen (19), der durch das brückenförmige Element (15) und eine Fläche der zweiten Leiste (8) geht, welche einen Gleitschlitz (20) für den ersten Zapfen (19) zur Regulierverschiebung des brückenförmigen Elementes (15) hat; wobei der erste Zapfen (19) an eine interne Halteplatte angeschlossen ist, dazu bestimmt, es dem brückenförmigen Element (15) zu ermöglichen, nach dem Festziehen durch Kontakt mit einer entsprechenden internen Oberfläche der zweiten Leiste (8) in seiner Position befestigt zu werden.

6. Maschine nach Patentanspruch 4, **dadurch gekennzeichnet, dass** die zweite Leiste (8) an ihrem Anschlagende eine Messskala (22) enthält, dazu bestimmt, das Anzeigen des Besäumaufmasses (Q) zu erlauben, das durch die Verschiebung des brückenförmigen Elementes (15) festgelegt worden ist, und welches zwischen dem brückenförmigen Element (15) und einem Anlenkpunkt (14) eines kastenförmigen Körpers (13) gesehen werden kann.

7. Maschine nach Patentanspruch 2, **dadurch gekennzeichnet, dass** die zweiten Anschlag- und Bezugsmittel (11) einen brückenförmigen Trägerkörper (23) enthalten, anbringbar mit seinem passenden Profil an der ersten Leiste (6) und in einer Position, die mit dem Anschlagende der zweiten Leiste (8) übereinstimmt; wobei an den Körper (23) eine untere horizontale Platte (24) angeschlossen ist, welche die zweiten Regulierelemente (12) bildet, wobei sie einen Anschlagbereich für die erste Seite (3a) der Platte (3) hat und sich in beiden Richtungen und parallel zu einem beweglichen Abschnitt (2b) und im Verhältnis zu dem Trägerkörper (23) bewegt, und zwar je nach dem Besäumaufmass (Q), das an den ersten Anschlagmitteln (9) eingestellt worden ist.

8. Maschine nach Patentanspruch 7, **dadurch gekennzeichnet, dass** der Trägerkörper (23) an der ersten Leiste (6) dicht an einer Anschlagstange (7) positioniert ist, welche an der ersten Leiste (6) auf solche Weise gleitet, dass sie einen Anschlagbezug bildet, an welchem die horizontale Platte (24) mit den ersten Anschlagmitteln (9) übereinstimmt.

9. Maschine nach Patentanspruch 7, **dadurch gekennzeichnet, dass** die horizontale Platte (24) einen Gewindezapfen (26) enthält, welcher sich in einen Sitz (27) schraubt, der in den Trägerkörper (23) eingearbeitet und einem fest mit der Platte (24) verbundenen vertikalen Arm (28) zugeordnet ist; wobei der Zapfen (26) an einem Betätigungsknopf (29) befestigt ist, vorgesehen, um der Platte (24) die Regulierverschiebung im Verhältnis zu dem Körper (23) zu ermöglichen.

10. Maschine nach Patentanspruch 9, **dadurch gekennzeichnet, dass** die Platte (24) eine Messleiste (30) enthält, und zwar dicht an einer Bezugsmarkierung (31), die sich an einer vorderen Fläche (23a) des Trägerkörpers (23) befindet, so dass eine Kontrolle des Besäumaufmasses (Q) erlaubt wird.

11. Maschine nach Patentanspruch 7, **dadurch gekennzeichnet, dass** der Trägerkörper (23) einen Sitz (32) aufweist, welcher mit dem Profil der ersten Leiste (6) zusammenpasst und an dieses angeschlossen werden kann, sowie lösbare Mittel (32a) zum Befestigen des Körpers (23) an der ersten Leiste (6).

12. Maschine nach Patentanspruch 7, **dadurch gekennzeichnet, dass** der Trägerkörper (23) einen Sitz (32) aufweist, welcher zu einer beweglichen Halterung (33) passt und an diese angeschlossen werden kann, welche auf der ersten Leiste (6) gleitet und eine Anschlagstange (7) und ein Aufmassdisplay (34) an der ersten Leiste (6) trägt; wobei es möglich ist, den Körper (23) zwischen der Stange (7) und dem Display (34) anzubringen.

13. Maschine nach Patentanspruch 12, **dadurch gekennzeichnet, dass** der Trägerkörper (23) lösbare Mittel (32a) zum Befestigen des Körpers (23) an der beweglichen Halterung (33) hat.

## Revendications

1. Une machine à usiner des panneaux, telle machine (1) comprenant au moins :
- une table d'usinage (2) constituée d'une partie fixe (2a) de support et d'une partie (2b) mobile, dans les deux sens, le long d'une direction d'avancement (A) et destinée à permettre le coulissement du panneau (3) à couper ;
- un outil d'usinage (4) placé sur la partie fixe (2a) de la table d'usinage (2) ;
- un châssis (5) pour le support du panneau (3) à usiner, associé et coplanaire à la partie mobile (2b), dépassant des dimensions hors tout de la table (2) et coulissant parallèlement à la direction d'avancement (A), dans les deux sens ; le châssis (5) ayant un premier guide de butée (6) pour le panneau (3) disposé perpendiculairement à la direction d'avancement (A) et pourvu d'une barre réglable (7) de butée du panneau (3) perpendiculaire au premier guide (6) et pouvant coulisser le long de ce même premier guide (6) ;
- un deuxième guide de butée (8) pour le panneau (3), associé de façon coulissante à la partie mobile (2b) et pourvu de premiers moyens (9) de butée et de référence pour un premier côté (3a) du panneau (3), lesdits moyens étant situés sur l'extrémité du deuxième guide (8) et étant destinés à permettre un recul du premier côté (3a), situé sur la partie mobile (2b), d'une cote prédéfinie par rapport à l'outil (4), définissant ainsi une cote (Q) de matériau en excès ou de rognage pouvant être enlevée sur le deuxième côté (3b) opposé du panneau (3), la machine étant **caractérisée en ce que** les premiers moyens (9) de butée et de référence sont pourvus de premiers organes (10) pour le réglage de la cote de rognage (Q) à enlever du panneau (3).

2. La machine selon la revendication 1, **caractérisée en ce qu'**elle comprend, sur le premier guide (6), des deuxièmes moyens (11) de butée et de référence pour le premier côté (3a), ces moyens étant pourvus de deuxièmes organes (12) pour le réglage de la cote de rognage (Q) et pouvant être coordonnés avec les premiers moyens (9) de butée et de référence situés sur le deuxième guide (8) de manière à permettre un usinage parallèle sur le deuxième côté (3b) usinable.

3. La machine selon la revendication 1, **caractérisée en ce que** les premiers moyens (9) de butée et de référence comprennent :
- un corps - boîtier (13) pivotant sur l'extrémité du deuxième guide (8) et pouvant tourner entre une position opérationnelle basse de butée préliminaire contre le premier côté (3a), dans laquelle le corps (13) recouvre une surface de butée opérationnelle sur le deuxième guide (8), et une position non opérationnelle haute, dans laquelle le corps (13) est tourné vers le haut et permet au premier côté (3a) d'accéder librement jusqu'à la butée opérationnelle.

4. La machine selon la revendication 3, **caractérisée en ce que** les premiers organes de réglage (10) comprennent :
- un élément de référence (15) en forme de pont, entourant de façon coulissante le deuxième guide (8) ;
- une barre de butée (16) opérationnelle qui coulisse parallèlement à et par rapport au deuxième guide (8), est située au-dessous dudit deuxième guide et est associée, des deux côtés, aux extrémités inférieures de l'élément (15) en forme de pont ; l'élément (15) en forme de pont étant mobile le long du deuxième guide (8) de manière à permettre un coulissement relatif dans les deux sens de la barre (16) d'une première position limite rentrée, dans laquelle l'extrémité libre de la barre (16) coïncide avec l'extrémité du deuxième guide (8), correspondant à la cote de rognage (Q) maximum, et une deuxième position limite sortie, dans laquelle la barre de butée (16) dépasse de l'extrémité du deuxième guide (8), correspondant à la cote de rognage (Q) minimum.

5. La machine selon la revendication 4, **caractérisée en ce que** l'élément (15) en forme de pont a des moyens réversibles (17) pour le blocage dudit élément (15) en forme de pont dans la position prédéfinie ; lesdits moyens (17) comprenant un bouton de commande (18) associé à une première broche filetée (19) passant dans l'élément (15) en forme de pont et une surface du deuxième guide (8) comportant une fente (20) de coulissement de la première broche (19) pour le mouvement de réglage de l'élément (15) en forme de pont ; la première broche (19) étant assujettie à une plaque de retenue intérieure destinée à permettre le blocage en position de l'élément (15) en forme de pont par contact, après serrage, avec une surface intérieure correspondante du deuxième guide (8).

6. La machine selon la revendication 4, **caractérisée en ce que** le deuxième guide (8) présente, au niveau de son extrémité de butée, une échelle graduée (22) destinée à permettre la visualisation de la cote de rognage (Q) définie par le mouvement de l'élément (15) en forme de pont et visible entre ledit élément (15) en forme de pont et un point de pivotement (14) d'un corps - boîtier (13).

7. La machine selon la revendication 2, **caractérisée en ce que** les deuxièmes moyens (11) de butée et de référence comprennent un corps de support (23) en forme de pont pouvant être appliqué, au niveau de son profil complémentaire, sur le premier guide (6) et dans une position coïncidant avec l'extrémité de butée du deuxième guide (8); au corps (23) étant associée une plaque horizontale (24) inférieure, constituant les deuxièmes organes de réglage (12), ayant une zone de butée pour le premier côté (3a) du panneau (3) et mobile, dans les deux sens, parallèlement à une partie mobile (2b) et par rapport au corps de support (23) en fonction de la cote de rognage (Q) définie sur les premiers moyens (9) de butée.

8. La machine selon la revendication 7, **caractérisée en ce que** le corps de support (23) est placé sur le premier guide (6) à proximité d'une barre de butée (7) qui coulisse sur ledit premier guide (6) de manière à définir une référence de butée au niveau de laquelle la plaque horizontale (24) coïncide avec les premiers moyens (9) de butée.

9. La machine selon la revendication 7, **caractérisée en ce que** la plaque horizontale (24) a une broche filetée (26) qui se visse dans un logement (27) réalisé dans le corps de support (23) et est associée à un bras vertical (28) solidaire de la plaque (24) ; la broche (26) étant associée à un bouton de manoeuvre (29) destiné à permettre le mouvement de réglage de la plaque (24) par rapport au corps (23).

10. La machine selon la revendication 9, **caractérisée en ce que** la plaque (24) a une règle graduée (30) à proximité d'un repère de référence (31) réalisé sur une surface frontale (23a) du corps de support (23) afin de permettre un contrôle de la cote de rognage (Q).

11. La machine selon la revendication 7, **caractérisée en ce que** le corps de support (23) a un logement (32) qui correspond à et peut être accouplé avec le profil du premier guide (6) et des moyens réversibles (32a) pour le blocage dudit corps (23) sur le premier guide (6).

12. La machine selon la revendication 7, **caractérisée en ce que** le corps de support (23) a un logement (32) qui correspond à et peut être accouplé avec un support mobile (33) coulissant sur le premier guide (6) et supportant une barre de butée (7) et un afficheur (34) de cote sur le premier guide (6) ; le corps (23) pouvant être associé entre la barre (7) et l'afficheur (34).

13. La machine selon la revendication 12, **caractérisée en ce que** le corps de support (23) a des moyens réversibles (32a) pour le blocage dudit corps (23) sur le support mobile (33).
